# EUROPEAN PATENT APPLICATION

(11) **EP 3 979 561 A1**
(43) Date of publication of application: **06.04.2022**
(21) Application number: 20199598.2
(22) Date of filing: 01.10.2020
(51) Int. Cl.: H04L 12/24, H04L 12/26

(54) **IMPROVEMENT OF AN AI-BASED NETWORK CONTROLLER IN A COMMUNICATION NETWORK**

(71) Applicant: Siemens Aktiengesellschaft, 80333 München (DE)
(72) Inventor: Kulkarni, Vivek, 82008 Unterhaching (DE); Zirkler, Andreas, 85521 Ottobrunn (DE)

(57) **Abstract**

The invention discloses an arrangement for generating training data (NWS), comprising:
- at least one network controller (1) for a communication network (1.1), whereby the network controller (1) comprises an artificial intelligence module (1.2),
- a digital twin (2) of the communication network (1.1) emulating the communication network (1.1) and
- an injection module (3), set up for supporting supervised learning of the artificial intelligence module (1.2),
° whereby the injection module (3) is set up to inject simulated faults (F) and/or simulated communication services (CS) into the digital twin (2) and therewith to stimulate the generation of training data for supervised learning of the artificial intelligence module (1.2), wherein the training data at least include the stimulated network state data (NWS) of the emulated communication network.

The invention further discloses a related automated method for generating training data (NWS) for supervised learning of an artificial intelligence module (1.2) of a network controller (1).

## Description

### FIELD OF THE INVENTION

The present invention relates to an arrangement and an automated method, preferably a computer-implemented method, for generating training data for supervised learning of an artificial intelligence of a network controller in a communication network.

### BACKGROUND OF THE INVENTION

Artificial Intelligence is nowadays viewed as a possible solution for many complex issues, where the development of traditional algorithms is expensive. This is the case for the configuration of complex networks, e.g. switched meshed Ethernet networks, particularly when high reliability requirements and time-aware shapers come into play. For this kind of networks, AI is expected to support the analysis of failure scenarios and the early detection of faults for predictive maintenance or changeover to redundant paths.

The issue for the application of machine learning algorithms for pattern detection is, that they need a huge amount of training data, preferably labelled training data for supervised learning. This means, that an AI algorithm would need to observe a network for a very long time before it can rate changes in the network and differentiate between changes being caused by normal reasons, like changing demands of end devices, and changes due to faults. Due to the great variety of possible network topologies and the infinite possible combinations of applications using a network it is very difficult to re-use training data from other networks.

Different companies propose the usage of AI in network controllers on their homepages. No prior art could be found how they will gather enough set of training data without monitoring the real network for quite a long time.

### SUMMARY OF THE INVENTION

The objective of the present invention is to provide a solution for improving an AI-based network controller.

To accomplish the objective, the present invention provides a solution according to the independent claims. Advantageous embodiments are provided in the dependent claims.

The core of the invention is the usage of an emulated or simulated communication network, referred to as digital twin of the communication network, in combination with systematic fault injection and systematic variation of typical communication patterns (= communication services) to generate training data (= network state data) for AI-based analysis of the network state, even before the communication network is set to use. With that, benefits from AI-based network controllers can be achieved much earlier, i.e. from the first real-world use of the network controller instead of waiting for a long training period.

The invention claims an arrangement for generating training data. The arrangement comprises at least one network controller for a communication network, whereby the network controller comprises an artificial intelligence module, a digital twin of the communication network emulating/simulating the communication network and an injection module set up for supporting supervised learning of the artificial intelligence module, wherein the injection module is set up to inject simulated faults and/or simulated communication services into the digital twin and therewith to stimulate the generation of training data for supervised learning of the artificial intelligence module, wherein the training data at least include the stimulated network state data of the emulated communication network.

The advantage of the invention is that many training data can be generating without stressing the real-world communication network. Also, very seldom occurring faults can be used for training the AI-based network controller. The supervised learning can be performed in advance before the network controller goes in operation.

In a further embodiment the digital twin is set up to emulate at least nodes, paths and end stations of the communication network.

In a further embodiment the injection module is set up to support the network controller by supervised learning to analyse failure scenarios, to early detect faults for predictive maintenance and/or to changeover to redundant paths in the communication network.

In a further embodiment faults are link outages and/or network node faults.

In a further embodiment the network controller is set up to control and to manage the communication network.

In a further embodiment the injection module is set up to derive the communication services from application models in the digital twin, wherein the derived communication services represent a communication services existing in the communication network.

In a further embodiment a computational device comprises the digital twin and the injection module.

As well, the invention claims an automated method, preferably a computer-implemented method, for generating training data for supervised learning of an artificial intelligence of a network controller, whereby a digital twin of a communication network controlled by the network controller generates the training data by injecting faults and/or communication services into the digital twin by an injection module.

In a further embodiment the injection module supports the supervised learning of the artificial intelligence module and injects simulated faults and/or simulated communication services into the digital twin and therewith stimulates the generation of the training data, wherein the training data at least include the stimulated network state data of the emulated communication network.

In a further embodiment the digital twin emulates at least nodes, paths and end stations of the communication network.

In a further embodiment the injection module supports the network controller by supervised learning in order to analyse failure scenarios, to early detect faults for predictive maintenance and/or to changeover to redundant paths in the communication network.

In a further embodiment the network controller controls and manages the communication network.

In a further embodiment the injection module derives the communication service from application models in the digital twin, wherein the derived communication service represents a communication service existing in the communication network.

Further benefits and advantages of the present invention will become apparent after a careful reading of the detailed description with appropriate reference to the accompanying drawings.

### BRIEF DESCRIPTION OF THE DRAWINGS

FIG. 1 shows a block diagram of the training arrangement and
FIG. 2 shows a block diagram of an example of an emulated network.

### DETAILED DESCRIPTION OF THE INVENTION

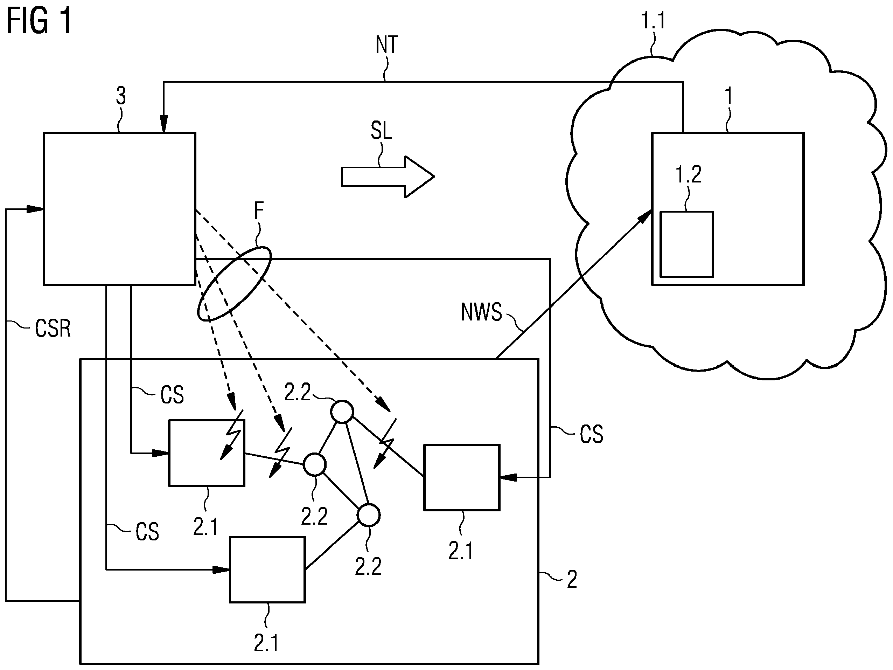

As an embodiment of the invention FIG. 1 shows a block diagram of the inventive arrangement with a simulation of the network under concern, i.e. a digital twin 2 of the network, whereby an AI-based (= artificial intelligence module 1.2) network controller 1 (as well called network manager) is set up to control and to manage the communication network 1.1 under concern. An injection module 3 is set up to inject communication services CS and faults F into the digital twin 2. Therefore, the injection module 3 gathers the network topology NT from the network controller 1 and information about communication service requirements CSR (= application data) from the digital twin 2.

The simulated end stations 2.1 of the digital twin 2 can be stimulated by the injection module 3 with injected communication services CS and their requirements, which are derived from a pre-defined and arbitrary varied set of communication services CS selected following the gathering (see above) from the digital twin 2.

And/or a pre-defined set of possible faults F, e.g. link outages, network node faults etc., can also arbitrarily varied and injected by the injection module 3 at every possible place in the simulated network, preferred in combination with different communication services CS placed on all available end stations 2.1.

With this, a very large set of combinations is possible, which ensures enough training data set (= network status NWS) for the AI-based network controller 1 for supervised learning SL by the injection module 3. Applying both to an emulated (= simulated) communication network enables the injection module (= training system / supervised learning unit) to apply faults F which are difficult to inject in a real communication network 1.1 and significantly speeds up the training compared to tests in a real communication network 1.1.

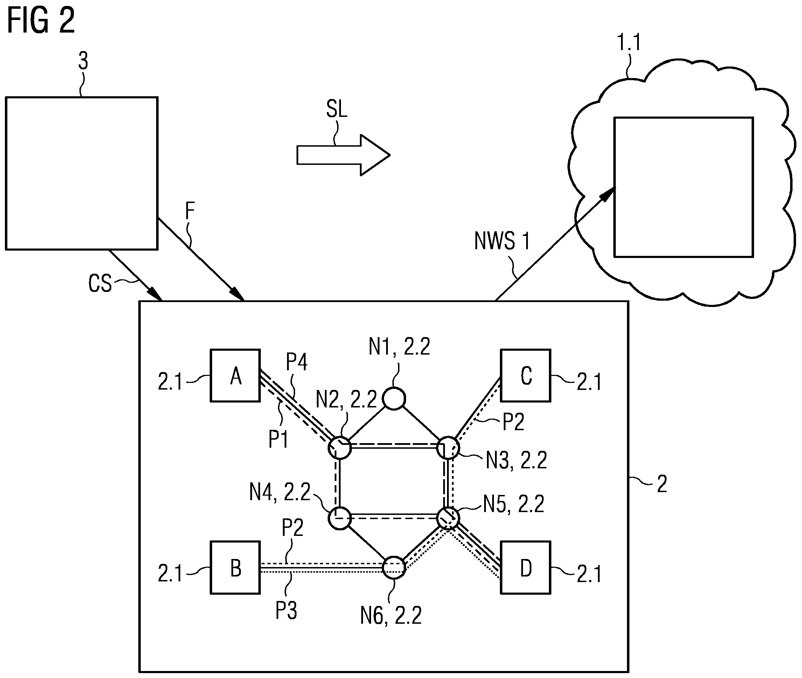

FIG. 2 illustrates an embodiment of injections of communication services and faults based on FIG. 1 in more detail.

Firstly, it is assumed that a time- and safety-critical communication service CS1 transports data from end station A to end station D (path P1). In this example, this initial communication service CS1 is derived from the application models in the digital twin 2 and represents a communication service CS1 which will be existing in the real-world communication network 1.1, and which shall be served with a guaranteed Quality of Service (QoS).

The injection module 3 now can add additional communication services CS from arbitrary source end stations 2.1 to arbitrary destination end stations 2.1, with arbitrary Quality of Service parameters, e.g. communication class (priority) attributes, cycle times, bandwidth, etc. For example, it could add communication service CS2 from B to C. As the shortest path from end station B to end station C (path P2) does never use a link in common with the enforced path from end station A to end station D (path P1), none of the additional communication services CS from B to C (path P2) will harm the service quality for the service from end station A to end station D (path P1), which can be learned by the network controller 1 from thereof derived training data (= network state data NWS).

The same is valid for communication services CS in the opposite direction, i.e. from end station C to end station B (path P2). The injection module 3 can add more and new services CS, e.g. from end station B to end station D (path P3), which now shares the link from network node N5 to end station D. If it adds communication services CS of same or higher priority as the initial (path P1) communication service CS1 or with an interfering cycle time or too large packets, the quality of the initial communication service CS1 might be decreased, i.e. it might suffer from insufficient bandwidth, too long end-to-end delay or too high jitter. Again, the AI-based network controller 1 can learn, that communication services CS from end station B to end station D might be critical for the already given QoS guarantees, and which parameters of these communication services CS are critical.

In parallel, injection module 3 can inject faults F to the emulated network of the digital twin 2, e.g. it can inject a link outage on the link from network node N2 to network node N4. The network controller 1 will observe that this breaks the communication service from end station A to end station D, and that it can be restored by using an alternative path through the emulated network (path P4). Having learned this alternative path P4, a failover during real network operation will be faster.

Additionally, the network controller 1 can learn, that also the alternative path P4 is not influenced by additional communication services CS from end station B to end station C, but still by communication services CS from end station B to end station D - and additionally from communication services CS from end station C to end station B. Thus, new communication services CS from end station C to end station B can be critical for the initial communication service CS in case of a fault on the link from network node N2 to network node N4.

This simplified example illustrates, how combinations of injected communication services CS and faults F can be used to train the network controller 1. The training enables it to react on faults F and to predict, if additionally requested communication services CS are influencing others, both during normal operation and while faults F in the communication network 1.1 occur. With that, network controller is also enabled to give warnings for faults F which affect very large or important portions of the communication network 1.1 and enable predictive optimizations of the communication network 1.1 by the network controller 1 to eliminate these bottlenecks.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: network controller
- 1.1: communication network
- 1.2: artificial intelligence module
- 2: digital twin of the communication network
- 2.1: end station of communication network
- 2.2: node of communication network
- 3: injection module

- A-D: end station
- CR: communication requirements
- CS: communication services
- F: fault
- N1-N4: network node
- NT: network topology
- P1-P4: path through emulated network
- NWS: network state data (training data)
- SL: supervised learning

## Claims

1. Arrangement for generating training data (NWS), comprising:
- at least one network controller (1) for a communication network (1.1), whereby the network controller (1) comprises an artificial intelligence module (1.2),
- a digital twin (2) of the communication network (1.1) emulating or simulating the communication network (1.1) and
- an injection module (3), set up for supporting supervised learning of the artificial intelligence module (1.2), ∘ whereby the injection module (3) is set up to inject simulated faults (F) and/or simulated communication services (CS) into the digital twin (2) and therewith to stimulate the generation of training data for supervised learning of the artificial intelligence module (1.2), wherein the training data at least include the stimulated network state data (NWS) of the emulated communication network.

2. Arrangement according to claim 1, whereby the digital twin (2) is set up to emulate at least nodes (2.2, N1 - N4), paths (P1 - P4) and end stations (2.1, A - D) of the communication network (1.1).

3. Arrangement according to claim 1 or 2, whereby the injection module (3) is set up to support the network controller (1) by supervised learning to analyse failure scenarios, to early detect faults for predictive maintenance and/or to changeover to redundant paths in the communication network (1.1) .

4. Arrangement according to one of the previous claims, whereby faults (F) are link outages and/or network node (2.2) faults.

5. Arrangement according to one of the previous claims, whereby the network controller (1) is set up to control and to manage the communication network (1.1).

6. Arrangement according to one of the previous claims, whereby the injection module (3) is set up to derive communication services (CS) from application models in the digital twin 2, wherein the derived communication services (CS) represent communication services (CS) existing in the communication network (1.1).

7. Arrangement according to one of the previous claims, whereby the digital twin (2) and the injection module (3) is designed in a computational device.

8. Automated method for generating training data (NWS) for supervised learning of an artificial intelligence module (1.2) of a network controller (1), whereby a digital twin (2) of a communication network (1.1) controlled by the network controller (1) generates the training data (NWS) by injecting faults (F) and/or communication services (CS) into the digital twin (2) by an injection module (3).

9. Automated method according to claim 8, whereby the injection module (3) supports the supervised learning of the artificial intelligence module (1.2) and injects simulated faults (F) and/or simulated communication services (CS) into the digital twin (2) and therewith stimulates the generation of the training data (NWS), wherein the training data (NWS) at least include the stimulated network state data (NWS) of the emulated communication network and data about injected faults.

10. Automated method according to claim 8 or 9, whereby the digital twin (2) emulates at least nodes (2.2, N1 - N6), paths (P1 - P4) and end stations (2.1, A - D) of the communication network (1.1).

11. Automated method according to one of the claims 8 to 10, whereby the injection module (3) supports the network controller (1) by supervised learning in order to analyse failure scenarios, to early detect faults for predictive maintenance and/or to changeover to redundant paths in the communication network (1.1).

12. Automated method according to one of the claims 8 to 11, whereby faults (F) are link outages and/or network node faults.

13. Automated method according to one of the claims 8 to 12, whereby the network controller (1) controls and manages the communication network (1.1).

14. Automated method according to one of the claims 8 to 13, whereby the injection module (3) derives the communication service (CS) from application models in the digital twin (2), wherein the derived communication service (CS) represents a communication service (CS) existing in the communication network (1.1).
